# EUROPEAN PATENT APPLICATION

(11) **EP 1 950 067 A1**
(43) Date of publication of application: **30.07.2008**
(21) Application number: 06822599.4
(22) Date of filing: 30.10.2006
(51) Int. Cl.: B60J 1/00, C03C 17/22

(54) **CURVED GLASS PLATE WITH LIGHT SHIELDING FILM FOR VEHICLE**

(30) Priority: 31.10.2005 JP 2005316727
(71) Applicant: Nippon Sheet Glass Company, Limited, Tokyo 108-6321 (JP)
(72) Inventor: YAMADA, Kazuo, Tokyo 1086321 (JP); SHIMOMURA, Takahiro, Tokyo 108-6321 (JP); SHIOTSUKA, Masayuki, Tokyo 108-6321 (JP); ASAOKA, Hisashi, Tokyo 108-6321 (JP)
(74) Representative: Intes, Didier Gérard André
(86) International application number: PCT/JP2006/321642
(87) International publication number: WO 2007/052600

(57) **Abstract**

A bent glass sheet (1) with a light-shielding film for vehicles includes a glass sheet, and a light-shielding film formed in at least a part, i.e. a film-formed portion (11), of a peripheral portion of one surface of the glass sheet. The light-shielding film is composed of a band-shaped film (12) and a dot-patterned film (13). The band-shaped film is arranged in an outer part of the peripheral portion. The dot-patterned film composed of a plurality of dots (14) is arranged in an inner part with reference to the band-shaped film. The plurality of dots are positioned so that a distribution of the dot shielding ratios decreases from the edge of the band-shaped film toward a side of a glass surface (a non-film-formed portion (15)) on which the band-shaped film is not formed, where the dot shielding ratios are values of peaks of mountains formed of a distribution of the dot-width shielding ratios, or dot-diameter shielding ratios. A region in which the dot shielding ratio is at least 50% extends up to at least 4 mm from the edge of the band-shaped film.

## Description

### Technical Field

The present invention relates to a bent glass sheet for vehicles that has a light-shielding film formed in its periphery.

### Background Art

Window glasses for vehicles that have been used conventionally are those in which a non-transparent light-shielding film (a colored light-shielding film) having a deep color such as black, grey, etc. is formed in the periphery of a glass sheet so as to prevent visible light and ultraviolet rays from passing therethrough. Such window glasses are used mainly for fixed windows and are intended, for example, to:
1) prevent the joints of interior materials from being seen from the outside of a car;
2) allow heating wires, antennas, etc. formed on the surface of the window glass on the inner side of a car to be unnoticeable,; and
3) prevent, for example, an adhesive from deteriorating due to solar radiation when window glass is attached to a window opening portion with the adhesive.

Basically, the light-shielding film is formed of a band-shaped film whose edge is positioned substantially along the periphery of the window opening portion. JP 2001-354447 A describes that the border portion between the band-shaped film (a frame-like black portion) and a part (a transparent part) where the band-shaped film is not formed often is designed so as to be inconspicuous by using a dot-shaped pattern (a dot pattern).

Furthermore, JP 2004-256342 A describes that in order to shield sunlight that enters into a space while keeping visibility, a dot-shaped thin film layer formed of black ceramic for shielding light is formed in the upper portion of the glass for driver's cabs in vehicles.

Generally, these light-shielding films are formed by applying a ceramic color paste onto a glass sheet by a method such as, for example, screen printing and then baking it. Glass sheets that are used for windows of vehicles have shapes with curved surfaces in many cases. When a light-shielding film is to be formed on such a glass sheet, the baking of the light-shielding film is carried out together with a heat bending process for bending the glass sheet and the subsequent slow cooling process or tempering process.

However, distortions may occur in the portion (a non-film-formed portion) where the light-shielding film is not formed that is adjacent to the portion (a film-formed portion) where the light-shielding film is formed on a bent glass sheet formed as described above. The following can be considered as causes of the distortions.

The portion (a coated portion) where a ceramic color paste has been applied on the glass sheet surface and the portion (a non-coated portion) where it has not been applied are different in heat absorptivity from each other. Hence, they would have different temperatures from each other in the heat bending process, which causes the difference in shrinkage. Accordingly, it is conceivable that creases may be generated at the bent glass sheet surface after it has been processed, or the curvature radius of the bent glass sheet may vary drastically between the film-formed portion and the non-film-formed portion.

A laminated glass sheet that is used as a windshield for a vehicle is composed of a bent glass sheet with such a light-shielding film formed thereon and a bent glass sheet with no light-shielding film formed thereon. This may result in further conspicuous distortions in some cases. When one is looking out from the inside of a car through a portion having a distortion of such a bent glass sheet, transparent distortions occur due to the distortions of the glass. When such a bent glass sheet is to be used as a windshield, it may cause driver's discomfort in some cases.

Conventionally, an improvement in such transparent distortions is achieved together with an improvement in transparent distortion caused due to the bent shape. For the method to be employed for the improvements, the heat bending process has been contrived. Such a contrivance, however, takes time and is expensive because it is necessary to make changes a few times to the heating conditions of a heating furnace and molds for bending a glass sheet.

### Disclosure of Invention

The present invention is intended to provide a bent glass sheet with a light-shielding film for vehicles in which transparent distortion is eased that occurs in the portion (a non-film-formed portion), of a bent glass sheet, that is adjacent to the portion (a film-formed portion) where a light-shielding film is formed and that does not have the light-shielding film formed therein.

In order to achieve the aforementioned object, the present inventors made studies by trial and error. As a result, they found out that there was a pattern of the dot-patterned film of the light-shielding film that allowed the transparent distortion to be eased.

A first bent glass sheet with a light-shielding film for vehicles of the present invention includes a glass sheet, and a light-shielding film formed in at least a part of a peripheral portion of one surface of the glass sheet. The light-shielding film is composed of a band-shaped film and a dot-patterned film. The band-shaped film is arranged in an outer part of the peripheral portion. The dot-patterned film composed of a plurality of dots is arranged in an inner part with reference to the band-shaped film. A ratio of a total dot width to a measurement interval is expressed as a dot-width shielding ratio, where the measurement interval being at least a diameter of the largest dot of the plurality of dots is set in a direction parallel with an edge of the band-shape film located on a side of the dot-patterned film, and the total dot width is a total of all dot widths that are present within the measurement interval in a measurement position, a plurality of the measurement positions being set in a direction perpendicular to the edge of the band-shaped film so that an interval between the measurement positions is half a diameter of the smallest dot of the plurality of dots or less. The plurality of dots are positioned so that a corrected distribution of the dot-width shielding ratios decreases from the edge of the band-shaped film toward a side of a glass surface on which the light-shielding film is not formed, where the corrected distribution is obtained by connecting to each other peaks of mountains that are formed of a distribution of the dot-width shielding ratios in the plurality of the measurement positions with a straight line. A region in which the dot-width shielding ratio is at least 50% in the corrected distribution extends up to at least 4 mm from the edge of the band-shaped film.

A second bent glass sheet with a light-shielding film for vehicles of the present invention includes a glass sheet, and a light-shielding film formed in at least a part of a peripheral portion of one surface of the glass sheet. The light-shielding film is composed of a band-shaped film and a dot-patterned film. The band-shaped film is arranged in an outer part of the peripheral portion. The dot-patterned film composed of a plurality of dots is arranged in an inner part with reference to the band-shaped film. The dot-patterned film includes a plurality of dot rows, and the respective dot rows include a plurality of dots arranged cyclically. The plurality of dots are positioned so that a center line of each of the dot rows is in parallel to a edge of the band-shaped film located on a side of the dot-patterned film, the center line being a line that extends through respective center points of the plurality of dots included in each of the dot rows. A ratio of a total dot diameter to a standard dot interval is expressed as a dot-diameter shielding ratio, where the standard dot interval is a one-cycle interval of a dot row having the longest cycle, and the total dot diameter is a total of all dot diameters that are present within the standard dot interval of each of the dot rows. The plurality of dots are positioned so that the dot-diameter shielding ratio decreases from a side of a first row toward a side of a last row, where the first row is a row nearest to the band-shaped film, while the last row is a row furthest therefrom. A region in which the dot-diameter shielding ratio is at least 50% extends at least up to 4 mm from the edge of the band-shaped film in a dot row position, the dot row position being a position of the center line of each of the dot rows with reference to the edge of the band-shaped film.

In this specification, when the dot is a perfect circle in shape, the dot diameter corresponds to a diameter of the circle, while when the dot is not a perfect circle but, for example, polygon, the dot diameter corresponds to a diameter of a circle that circumscribes the dot. The dot width corresponds to a length of the dot in the direction of the measurement interval that is set.

In each of the first and second bent glass sheets of the present invention, the dot-patterned film is provided in which a pattern is formed so that the shielding ratio decreases gradually from the edge of the band-shaped film toward a side of a glass surface on which the light-shielding film is not formed. This makes it possible to ease a transparent distortion occurring in the portion that is located on a side of the light-shielding film, and that is on a glass surface on which the light-shielding film is not formed. Accordingly, excellent visibility from the inner side of a car can be obtained.

### Brief Description of Drawings

Fig. 1 is a schematic view showing a bent glass sheet with a light-shielding film for vehicles according to the present invention.
Fig. 2 is an enlarged view of a part of a light-shielding film of an example of a bent glass sheet with a light-shielding film for vehicles according to the present invention.
Fig. 3 is an enlarged view of a part of a light-shielding film of another example of a bent glass sheet with a light-shielding film for vehicles according to the present invention.
Fig. 4 is an enlarged view of a part of a light-shielding film of still another example of a bent glass sheet with a light-shielding film for vehicles according to the present invention.
Fig. 5 is a schematic view showing a measurement system that is used for an evaluation of transparent distortions.
Fig. 6 is a graph showing characteristics of examples and comparative examples according to the present invention.
Figs. 7A to 7C show pictures that exhibit transparent distortions of Examples 1 to 3 according to the present invention, respectively.
Figs. 8A and 8B show pictures that exhibit transparent distortions of Comparative Examples 1 and 2 according to the present invention, respectively.

### Best Mode for Carrying Out the Invention

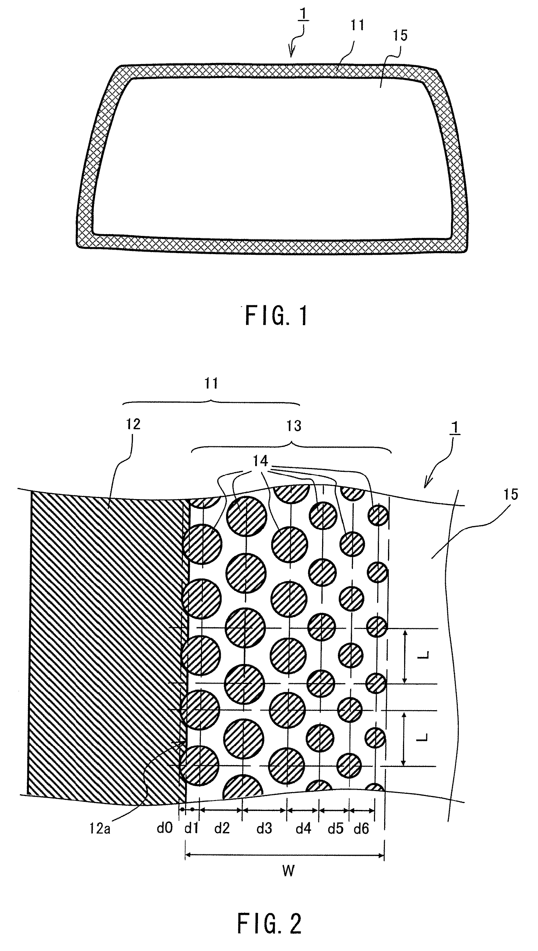

Examples of the light-shielding film of the bent glass sheet with a light-shielding film for vehicles according to the present invention are described using Figs. 1 to 4.

### [Light-Shielding Film]

Fig. 1 shows a schematic view of a bent glass sheet with a light-shielding film for vehicles. A film-formed portion 11 where a light-shielding film is formed is present in the peripheral portion of one surface of the bent glass sheet with a light-shielding film for vehicles 1, while a non-film-formed portion 15 where the light-shielding film is not formed is present in the inner portion with respect thereto. In the present example, the light-shielding film is formed in the entire peripheral portion of one surface of the bent glass sheet. However, the present invention is not just limited to this example, and the light-shielding film may be formed at least in a part of the peripheral portion.

Figs. 2 to 4 show enlarged views of the film-formed portion 11. In the film-formed portion 11, a band-shaped film 12 is formed in an outer part of the peripheral portion. A dot-patterned film 13 is formed in an inner part with reference to the band-shaped film (from the edge 12a of the band-shaped film 12 toward the non-film-formed portion 15). The light-shielding film is composed of the band-shaped film 12 and a dot-patterned film 13. The dot-patterned film 13 is composed of a plurality of rows (dot rows) that are arranged in parallel to the edge 12a of the band-shaped film12 located on the dot-patterned film 13 side. Each dot row includes a plurality of dots 14 (a group of dots) arranged cyclically. In each of the examples shown in Figs. 2 to 4, the edge 12a of the band-shaped film 12 was a straight line, while the number n of the dot rows was six.

Generally, the peripheries of window opening portions where bent glass sheets for vehicles are to be installed are approximately quadrangular or triangular. In addition, each side thereof often is a gently curved line. Accordingly, the edge of the band-shaped film that is positioned substantially along the periphery of the window opening portion also is a gently curved line in many cases. Hence, the dot pattern of the dot-patterned film is designed as follows. That is, after the position of each dot row is determined, with the edge of the band-shaped film being considered as a straight line, each dot row is arranged so that the center line thereof is approximately in parallel to the edge of the band-shaped film in many cases. The center line is a line that extends through respective center points of the plurality of dots included in each of the dot rows. Furthermore, in the corner parts (not shown in the drawings), the intervals L between dots are adjusted suitably so that the groups of dots are arranged in a natural manner. The following description is made using dot-patterned films located in the straight-line portion (in the portion where the edge of the band-shade film is a straight-line).

### (Arrangement of Groups of Dots)

A group of dots of the same size is arranged at equal intervals L (the intervals between the dots) in the first row of the dot-patterned film 13 shown in Fig. 2. The intervals between dots of other dot rows are equal to those between the dots of the first row. Accordingly, in the present example, the intervals between the dots each is a one-cycle interval (the standard dot interval) L.

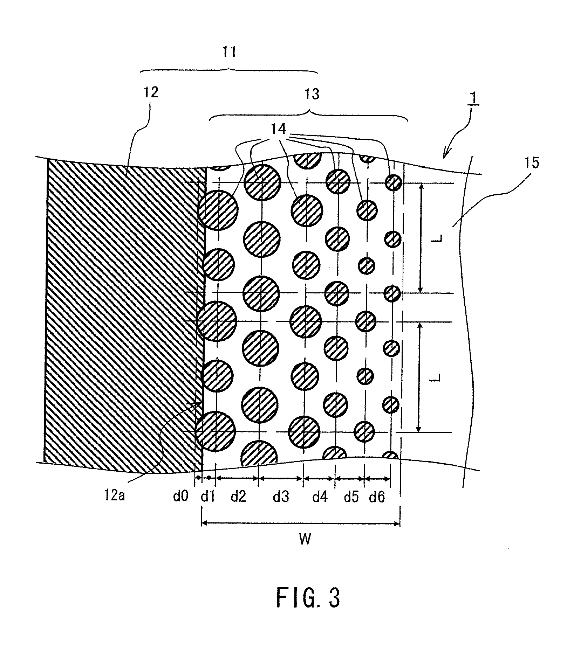

Groups of dots of two different sizes are arranged alternately in the first row of the dot-patterned film 13 shown in Fig. 3. In this case, the intervals of the dots having the same size each are a one-cycle interval L. In the odd-numbered dot rows, dots of two different sizes are arranged alternately as in the first row. In these dot rows, the intervals between the dots of the same size are equal to those between the dots of the first row. On the other hand, groups of dots of the same size are arranged at equal intervals in the even-numbered dot rows. In these dot rows, the interval between the dots of the same size is half the interval between the dots of the first row. Hence, the standard dot interval in the dot-patterned film 13 shown in Fig. 3 is a one-cycle interval *L* of the odd-numbered rows.

In each of the dot-patterned films 13 shown in Figs. 2 and 3, the center points of the dots 14 of every other row of the respective dot rows are aligned on substantially straight lines between the band-shaped film 12 and the non-film-formed portion 15.

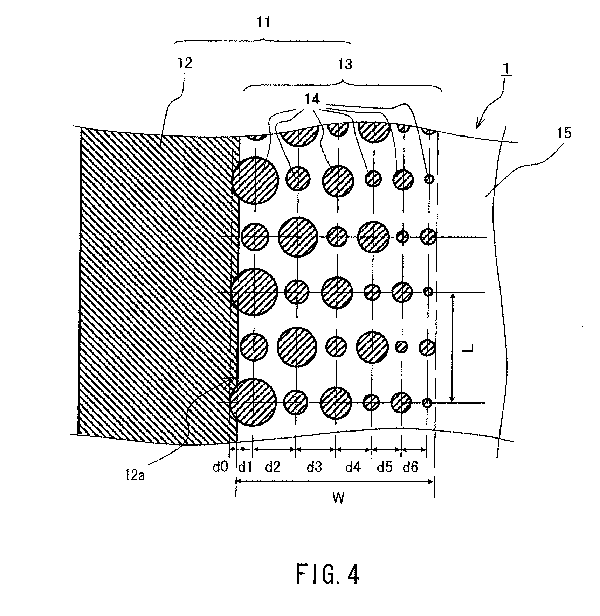

Dots of two different sizes are arranged alternately in the respective dot rows of the dot-patterned film 13 shown in Fig. 4. In addition, the center points of the dots 14 of the respective dot rows are aligned on substantially straight lines between the band-shaped film 12 and the non-film-formed portion 15. Larger dots of the odd-numbered rows and smaller dots of the even-numbered rows are arranged on the substantially straight lines. In this case, the intervals of the dots having the same size each are a one-cycle interval (the standard dot interval) *L*.

As shown in Figs. 2 to 4, the dot-patterned films 13 having an effect of gradation provided toward the inner portion (the non-film-formed portion 15) of the glass sheet surface do not attract excessive attention of observers. Hence, a bent glass sheet with a light-shielding film that has such a dot-patterned film 13 can be used suitably as a windshield of a vehicle.

The plurality of dots are arranged cyclically in the respective dot-patterned films 13 shown in Figs. 2 to 4. However, in order to achieve an improvement in transparent distortion, the plurality of dots do not necessarily need to be arranged cyclically. The positions of individual dots may be shifted or relatively small dots may be placed in the gaps between relatively large dots, as long as observers feel natural.

### (Characteristics of Dot-Patterned Film)

Characteristics of the dot-patterned films include the dot shape, the dot diameter, the number n of dot rows, the intervals between the dot rows *(d1, d2, d3,* ..., *dn,* where n denotes the number of dot rows), the overlap between the band-shaped film 12 and the dots of the first row, the width *W* of the dot-patterned film, the shielding ratio of dots, the distribution of the shielding ratios of dots, etc. These can be selected so that the transparent distortion is in the range that does not cause observer discomfort, with consideration given to the shape of the bent glass sheet. These characteristics are described below.

### (Dot Shape)

In Figs. 2 to 4, the shape of each dot 14 (the dot shape) is substantially a circle. Besides this, polygons such as substantial quadrangles also may be employed. As described later, the bent glass sheet with a light-shielding film for vehicles is produced by printing a ceramic color paste on a flat glass sheet and then by bending and shaping it by heat. Hence, each dot may be deformed slightly depending on the position where it is formed. In the case where the substantial circle is employed as the shape of each dot when it is printed, its shape becomes substantially elliptical if it is deformed. Thus, it does not hinder observers considerably from feeling natural. Accordingly, a substantial circle is employed suitably as the shape of each dot of the dot-patterned film when it is printed.

### (Dot Diameter)

With respect to the dot diameter in the dot-patterned film, an excessively large diameter may attract attention of observers more than necessary, while an excessively small diameter may cause difficulty in printing dots. Accordingly, the dot diameter can be selected from the range of 0.1 to 5 mm. The dot diameter is preferably in the range of 0.3 to 3 mm, more preferably in the range of 0.5 to 2.5 mm.

### (The Number of Dot Rows and Intervals between Dot Rows)

The number n of dot rows and the intervals between the dot rows *(d1, d2, d3,..., dn)* of the dot-patterned film preferably are determined so that an effect of the improvement in distortion can be obtained satisfactorily, with consideration given to the gradation effect to be exerted on observers. When the intervals between the dot rows are determined, the dot row positions also are determined that are positions of the center lines of the dot rows with reference to the edge of the band-shaped film located on the dot-patterned film side.

### (Overlap between Band-Shaped Film and Dots of First Row)

In Fig. 2, the group of dots of the first row is positioned so as to overlap with the band-shaped film 12 by *d0*. In Fig. 3, the group of larger dots of the first row is positioned so as to overlap with the band-shaped film 12 by *d0*, while the group of smaller dots also is positioned so as to overlap with the band-shaped film 12 although the portion of each smaller dot that overlaps with the film 12 is less than d0. In Fig. 4, the group of larger dots of the first row is positioned so as to overlap with the band-shaped film 12 by *d0,* while the group of smaller dots is positioned so as not to overlap with the band-shaped film 12. In these respective examples, all or a part of the group of dots of the first row is positioned so as to overlap with the band-shaped film 12 but it may be positioned so as not to overlap with the band-shaped film 12. Since natural gradation can be obtained easily when it is positioned so as to overlap with the band-shaped film 12, it is preferable that the group of dots of the first row be positioned so as to overlap with the band-shaped film 12.

### (Width of Dot-Patterned Film)

The width *W* of the dot-patterned film is defined by the edge of the band-shaped film 12 located on the side of the dot-patterned film and the outermost side (the side of the non-film-formed portion 15) of the group of dots of the last row. With respect to the width *W*, when it is narrow, the effect of the improvement in distortion cannot be obtained satisfactorily. Accordingly, the width Wneeds to be at least 4 mm. On the other hand, when it is too wide, observers may be made conscious of the dot-patterned film more than necessary. Thus, the width of the dot-patterned film is preferably in the range of 4 to 20 mm, more preferably in the range of 6 to 20 mm.

### (Shielding Ratio of Dot)

The plurality of dots 14 are positioned cyclically in the respective dot-patterned films shown in Figs. 2 to 4. However, as described above, in order to achieve the improvement in transparent distortion according to the present invention, the plurality of dots 14 do not necessarily need to be positioned cyclically. The shielding ratio (the shielding ratio of dots) indicates the shielding property of dots and can be considered basically as follows.

When the above-mentioned standard dot interval is not presented clearly, a measurement interval is set in a direction parallel with the edge of the band-shape film instead. A plurality of measurement positions are set in a direction perpendicular to the edge of the band-shaped film so that an interval between the measurement positions is a predetermined interval. The shielding ratio of dots in each of the measurement positions can be expressed as a dot-width shielding ratio. The dot-width shielding ratio is a ratio of a total dot width to the measurement interval. The total dot width is the total of all dot widths that are present within the above-mentioned measurement interval in each of the measurement positions.

The measurement interval and the interval between the measurement positions can be determined taking into consideration the size of and the interval between dots in a group of dots. For instance, the measurement interval can be an interval within which at least one largest dot among the group of dots is present. That is to say, a diameter of the largest dot in the plurality of dots of which the dot-patterned film is determined, and the measurement interval may be at least the diameter of the largest dot. On the other hand, the interval between the measurement positions can be half the diameter of the smallest dot or less. That is to say, a diameter of the smallest dot is determined, and the measurement positions may be set so that the interval between the measurement positions is half the diameter of the smallest dot or less.

With reference to the dot-patterned film 13 shown in Fig. 3, the relationship of the dot-width shielding ratio to the measurement position is described below.

In the case of this dot-patterned film 13, a group of dots of each dot row is arranged cyclically at standard dot intervals L. Hence, the measurement interval can be the standard dot interval *L*. One large dot and one small dot are included in each of the standard dot intervals L. The group of dots of the last row includes the smallest dots (dots having the diameter of smallest dot). Hence, when the intervals between the measurement positions are set at half the standard dot intervals L or less, the dot width can be detected at least once without fail. In order to measure it precisely, the interval between the measurement positions can be in the range of approximately 0.05 to 0.1 mm, for example.

The distribution of the dot-width shielding ratios with respect to the measurement positions is a distribution of a wave shape, with the position of each dot row being the peak of a mountain of the wave shape. The dot-width shielding ratios of valleys located between the peaks of mountains vary depending on the overlap between groups of dots of adjacent dot rows but may fall to 0% or a value near 0% in some cases. Accordingly, it is desirable that the distribution of the dot-width shielding ratios with respect to the measurement positions be corrected so as not to be affected by the dot-width shielding ratios of such valleys, and be evaluated as a distribution (a corrected distribution). The corrected distribution is obtained by connecting the peaks of mountains to each other that are formed of the distribution of the dot-width shielding ratios in the plurality of the measurement positions.

As shown in Figs. 2 to 4, when the groups of dots are positioned cyclically and each dot has its largest width in each dot row position, it is necessary only to measure the dot-width shielding ratio in each dot row position. In this case, the dot width in the dot row position can be the aforementioned dot diameter.

The shielding ratio of the dot can be expressed as the dot-diameter shielding ratio. The dot-diameter shielding ratio is a ratio of a total dot diameter to the above-mentioned standard dot interval. The total dot diameter is the total of all dot diameters that are present within the standard dot interval of each dot row.

### (Distribution of Dot Shielding Ratios)

From the viewpoint of the improvement in distortion, the groups of dots are positioned so that the dot shielding ratios (the values of peaks of mountains formed of a distribution of the dot-width shielding ratios, or dot-diameter shielding ratios) decrease from the band-shaped film side toward the side of the glass surface on which the band-shaped film is not formed (i.e. from the first row side toward the last row side). Here, the "the dot shielding ratios decrease from the band-shaped film side toward the side of the glass surface" means that the shielding ratios in the dot-patterned film show a tendency to decrease between the band-shaped film side and the side of the glass surface as a whole. A preferred example of this arrangement is an arrangement in which the dot shielding ratio decreases constantly without increasing at all. Specifically, desirable examples of the arrangement include an arrangement in which the dot shielding ratios substantially are unchanged from the band-shaped film side to a position (a predetermined position) between the first row side and the last row side and then decreases gradually or an arrangement in which the dot shielding ratio decreases monotonically (for example, linearly) from the band-shaped film side to the side of the glass surface on which the light-shielding film is not formed. Here, "the predetermined position" is not limited, and may be selected from any positions in the dot-patterned film. In addition, in this specification, "the dot shielding ratios substantially are unchanged" means that the dot shielding ratios are in the range in which a light shielding effect can be realized at a same level. When, for example, the difference of the shielding ratios is in the range of approximately 1%, preferably approximately 0.5%, it is considered that the shielding ratios are unchanged.

In the light-shielding film of the present invention, groups of dots having a dot shielding ratio of at least 50% are present in the region extending up to at least 4 mm from the edge of the band-shaped film 12. Conventionally, the dot-patterned film was used mainly to allow the border portion between the band-shaped film and a part where the band-shaped film is not formed to be inconspicuous. Therefore, in the conventional dot-patterned film, a portion having a light shielding effect at a high level (having a high dot-width shielding ratio, in the case of the present invention) is formed relatively narrow in width in order that observers may not be made conscious of the dot-patterned film more than necessary. On the other hand, the present invention has a further bject of easing the transparent distortion. Accordingly, in the present invention, groups of dots having a dot shielding ratio of at least 50% are present in the region extending up to at least 4 mm from the edge of the band-shaped film. It allows the transparent distortion to be eased so that the transparent distortion is in the range that does not cause the observer discomfort. In order to further reliably ease the transparent distortion, the groups of dots having a dot shielding ratio of at least 50% are preferably present in the region extending up to at least 5 mm from the edge of the band-shaped film, more preferably at least 6 mm. The dot shielding ratio in the above-mentioned region is preferably at least 60%

The aforementioned arrangements also are preferable from the viewpoint of the gradation effect to be exerted on observers.

### [Method of Manufacturing Bent Glass Sheet with Light-Shielding Film for Vehicles]

The following description is directed to a method of manufacturing a bent glass sheet with a light-shielding film for vehicles according to the present invention.

### (Cutting and Polishing Process)

First a flat glass sheet is cut into a predetermined shape in a cutting and polishing process. Then the edge of the glass is beveled. On this flat glass sheet, marks concerning various safety standards, production month and year, etc. are formed in a marking process as required. Generally, a sandblast method is used as the marking method.

### (Printing Process)

Subsequently, a ceramic color paste is printed on the flat glass sheet in a printing process. Through this printing process, a flat glass sheet is obtained in which a band-shaped coating layer and a dot-patterned coating layer are formed on the peripheral portion of one surface thereof. Generally, screen printing is employed as the printing method and also is employed in the examples of the present invention.

### (Drying Process)

Next, the flat glass sheet on which the coating layers have been formed is forwarded to a drying process. A flat glass sheet with dried films formed thereon is obtained through this drying process. This drying process may be substituted with a process of raising the temperature to the softening point temperature of the glass in the heating furnace in the heat bending process described below.

### (Heat Bending Process)

Next, the flat glass sheet with the coating layers formed thereon or the flat glass sheet with the dried films formed thereon is forwarded to the heat bending process. The coating layers or the dried films are heated in the heating furnace to around the softening point temperature of the glass and thereby are baked. Thereafter, it is bent using a mold. Thus, a bent glass sheet with a light-shielding film for vehicles is formed.

### (Air Cooling Process)

When the bent glass sheet to be manufactured is a tempered glass sheet, it is tempered through an air cooling process that is carried out immediately after the heat bending process. Thus, a tempered bent glass sheet with a light-shielding film for vehicles is obtained. When the bent glass sheet does not need to be tempered, it is cooled gradually after the bending process. As a result, a non-tempered bent glass sheet with a light-shielding film for vehicles is obtained. When the bent glass sheet to be manufactured is a laminated glass, the above-mentioned non-tempered bent glass sheet with a light-shielding film for vehicles and a non-tempered bent glass sheet with no light-shielding film formed thereon that has a bent shape corresponding thereto are bonded to each other, with an interlayer film being interposed therebetween. Thus a bent laminated glass sheet with a light-shielding film for vehicles is formed.

### [Method of Evaluating Transparent distortion]

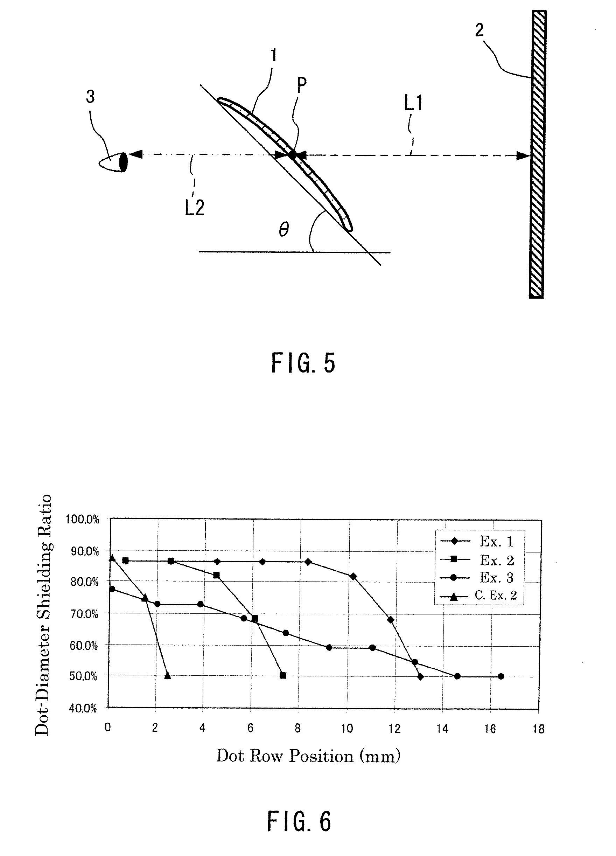

Fig. 5 shows a schematic view of a measurement system used for the evaluation, which is viewed from the side thereof. With respect to the bent glass sheet with a light-shielding film for vehicles 1 that was manufactured by the above-mentioned manufacturing method, an evaluation of transparent distortion is carried out by the following method.

The bent glass sheet with a light-shielding film for vehicles 1 is placed between a grid plate 2 that has been marked with black vertical and horizontal straight lines on a white background in a grid arrangement and an observation point 3 of an observer. The grid plate 2 is observed through the bent glass sheet with a light-shielding film for vehicles 1 and thereby the transparent distortion of the bent glass sheet with a light-shielding film for vehicles 1 can be observed. The grid plate 2 is placed perpendicularly to the horizontal plane. In order to make the brightness of the white background portion uniform as much as possible, the grid plate 2 is equipped with a lighting system with a plurality of fluorescent lamps arranged therein. The white background portion is made of a diffused plate that transmits light, while the black grid portion is formed of a tape or a paint that does not transmit light.

The observation point 3 and the center of the bent glass sheet with a light-shielding film for vehicles 1 in the vertical direction are positioned at approximately the same height. The bent glass sheet with a light-shielding film for vehicles 1 is placed on a setting stand (not shown in the figure) provided with a rotation mechanism that can adjust the angle θ of the bent glass sheet with respect to the horizontal plane so that the angle θ is equal to that at which it is installed in a vehicle. Furthermore, this setting stand also is provided with another rotation mechanism that can adjust the angle in the horizontal direction. Thus, it is possible to adjust the angle in the horizontal direction (not shown in the figure) of the bent glass sheet with a light-shielding film for vehicles 1 with respect to the grid plate 2.

The evaluation of transparent distortion to be carried out using the grid plate 2 is made by observing the changes in the degree to which the vertical or horizontal straight lines are curved or in the width of the straight lines while the position of the observation point 3 and the above-mentioned two angles are changed, and then considering all the observation results. This is because the transparent distortion varies depending on the angle at which observation is made or the relationship in positions of the observation point 3, the bent glass sheet with a light-shielding film for vehicles 1, and the grid plate 2.

This measurement system is installed in a dark room or in a substantially dark room in order to prevent any objects from being reflected in the bent glass sheet with a light-shielding film for vehicles 1.

### Examples

Bent glass sheets with a light-shielding film for vehicles that are described below in Examples 1 to 3 and Comparative Examples 1 and 2 were produced according to the above-mentioned manufacturing method. The color of the light-shielding film was black. These bent glass sheets with a light-shielding film for vehicles were laminated glass sheets that were used for windshields. Among them, the bent glass sheets with a light-shielding film for vehicles of Examples 1 and 2 as well as Comparative Example 1 were produced using flat glass sheets of the same shape and were subjected to the heat bending process that was carried out using molds of the same shape.

### [Example 1]

### (Characteristics of Light-Shielding Film)

Table 1 indicates the characteristics of a dot-patterned film of a light-shielding film formed on a bent glass sheet with a light-shielding film for vehicles according to Example 1. Table 1 also indicates the characteristics of light-shielding films of other examples. The width of the band-shaped film of the light-shielding film according to Example 1 was approximately 20 mm in the vicinity of the middle of the left-hand side of the glass sheet when viewed from the side of the surface to be positioned inside a vehicle when it is installed in the vehicle. The shape of dots of the dot-patterned film was a circle, while the number *n* of dot rows was set at eight. The overlap *d0* between the band-shaped film and the dots of the first row was set at 0.25 mm so that the dot-patterned film follows the band-shaped film smoothly. The interval *d1* between the edge of the band-shaped film and the center of the first row was set at 0.7 mm. On the other hand, the intervals *dn* between the dot rows thereafter were set at 1.9, 1.9, 1.9, 1.9, 1.9, 1.6, and 1.25 mm. In this case, the dot row positions were 0.7, 2.6, 4.5, 6.4, 8.3, 10.2, 11.8, and 13.05 mm, sequentially from the first row. In addition, the width *W* of the dot-patterned film was 13.6 mm. The intervals between dots were set at 2.2 mm in all the dot rows. The diameters of dots of the respective dot rows were 1.9, 1.9, 1.9, 1.9, 1.9, 1.8, 1.5, and 1.1 mm, sequentially from the first row. That is, a dot was present in the standard dot interval L (in this example, the standard dot interval was 2.2 mm) in all the dot rows. Accordingly, in this case, the dot-diameter shielding ratios were 86.4, 86.4, 86.4, 86.4, 86.4, 81.8, 68.2, and 50.0%, sequentially from the first row.

### (Relationship of Dot-Diameter Shielding Ratio with respect to Dot Row Position)

The dot-patterned film of Example 1 has groups of dots arranged cyclically. Accordingly, the dot-diameter shielding ratio was determined as the dot shielding ratio. Fig. 6 shows a graph indicating the distribution of the dot-diameter shielding ratios with respect to the dot row positions. In this graph, the respective points are connected to each other with straight lines so that the tendency is indicated. Fig. 6 also shows graphs of other examples. Even when the dot-width shielding ratios were determined as the dot shielding ratios, in the case where the intervals between the aforementioned measurement positions were set at 0.1 mm, the distribution (the corrected distribution) of a series of values of the peaks of mountains obtained in the distribution of the dot-width shielding ratios with respect to the measurement positions was approximately identical to that indicated in the graph shown in Fig. 6. This also held true in other examples.

From the graph shown in Fig. 6, it can be understood that in the dot-patterned film of Example 1, the dot-diameter shielding ratio is unchanged from the first row to the fifth row and then decreases parabolically from the sixth row to the eighth row, i.e. the last row. The dot-diameter shielding ratio was at least 85% in a region extending up to 8.3 mm from the edge of the band-shaped film to the dot row position of the fifth row, at least 80% in a region extending up to 10.2 mm to the dot row position of the sixth row, at least 70% in a region extending up to 10.2 mm to the dot row position of the sixth row, at least 60% in a region extending up to 11.8 mm to the dot row position of the seventh row, and at least 50% in a region extending up to 13.05 mm to the dot row position of the eighth row, which was the last row.

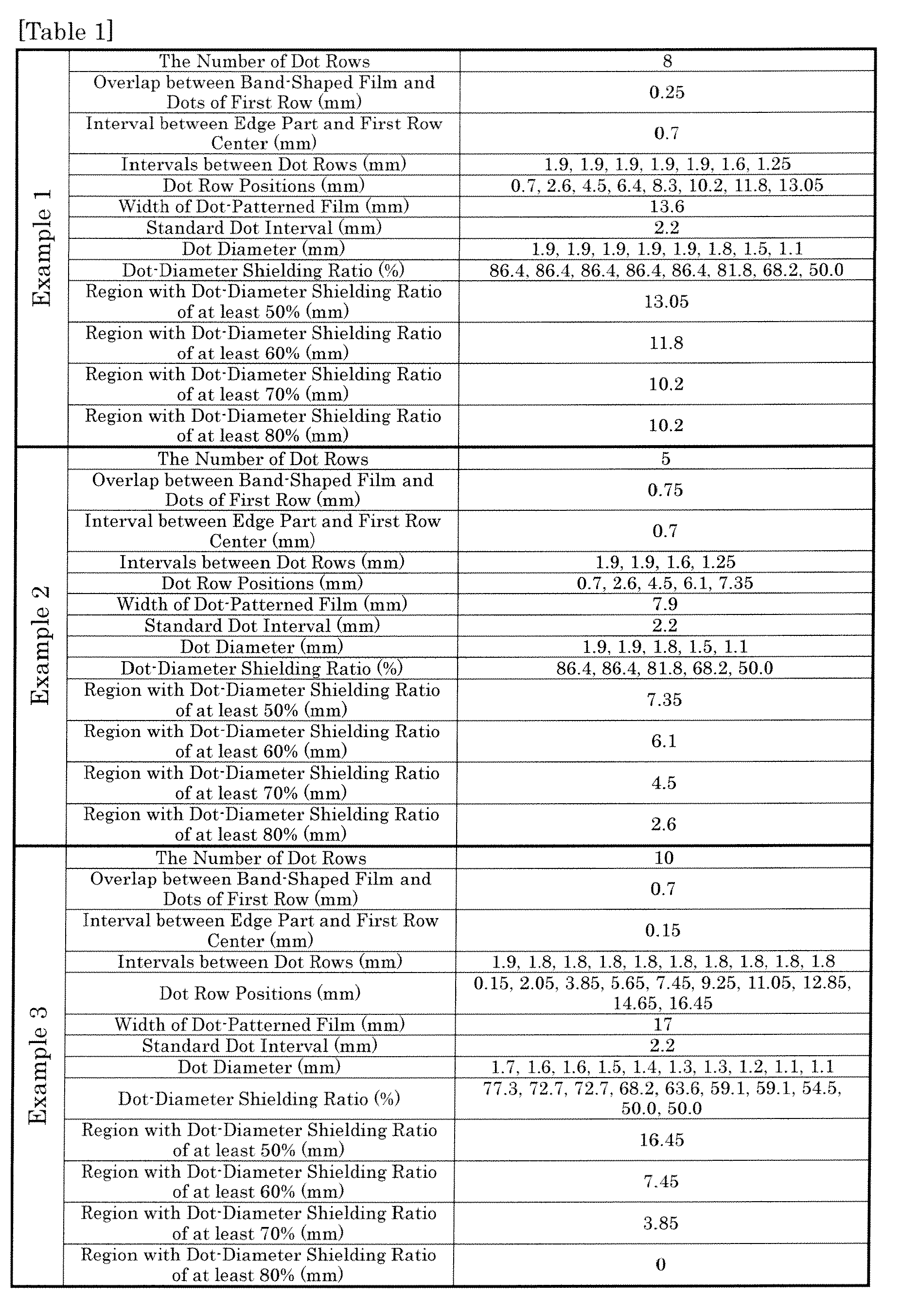

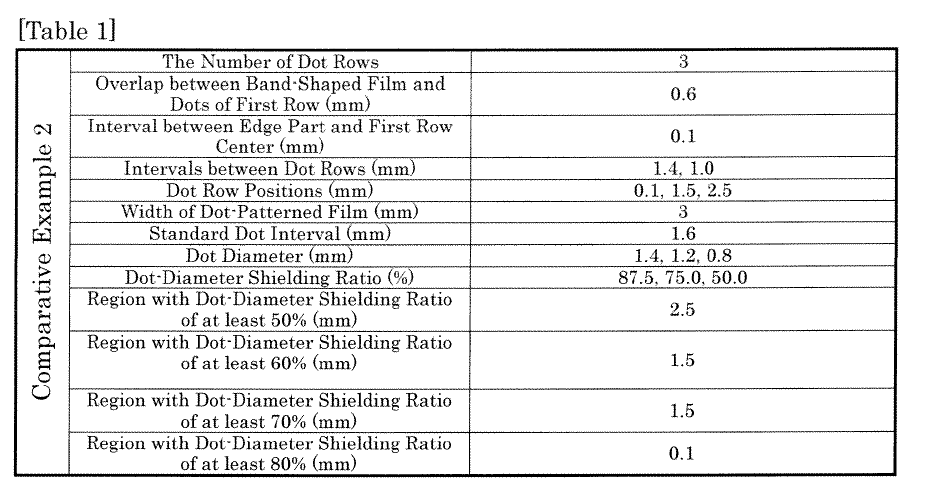

### [Example 2]

### (Characteristics of Light-Shielding Film)

Table 1 indicates the characteristics of a dot-patterned film of a light-shielding film formed on a bent glass sheet with a light-shielding film for vehicles according to Example 2. The width of the band-shaped film of the light-shielding film according to Example 2 was approximately 20 mm in the vicinity of the middle of the left-hand side of the glass sheet when viewed from the side of the surface to be positioned inside a vehicle when it is installed in the vehicle. The shape of dots of the dot-patterned film was a circle, while the number *n* of dot rows was set at five. The overlap *d0* between the band-shaped film and the dots of the first row was set at 0.25 mm so that the dot-patterned film follows the band-shaped film smoothly. The interval *d1* between the edge of the band-shaped film and the center of the first row was set at 0.7 mm. On the other hand, the intervals *dn* between the dot rows thereafter were set at 1.9, 1.9, 1.6, and 1.25 mm. In this case, the dot row positions were 0.7, 2.6, 4.5, 6.1, and 7.35 mm, sequentially from the first row. In addition, the width *W* of the dot-patterned film was 7.9 mm. The intervals between dots were set at 2.2 mm in all the dot rows. The diameters of dots of the respective dot rows were 1.9, 1.9, 1.8, 1.5, and 1.1 mm, sequentially from the first row. That is, a dot was present in the standard dot interval L (in this example, the standard dot interval was 2.2 mm) in all the dot rows. Accordingly, in this case, the dot-diameter shielding ratios were 86.4, 86.4, 81.8, 68.2, and 50.0%, sequentially from the first row.

### (Relationship of Dot-Diameter Shielding Ratio with respect to Dot Row Position)

Fig. 6 shows a graph indicating the distribution of the dot-diameter shielding ratios with respect to the dot row positions according to Example 2. From the graph shown in Fig. 6, it can be understood that in the dot-patterned film of Example 2, the dot-diameter shielding ratio was unchanged from the first row to the second row and then decreased parabolically from the third row to the fifth row, i.e. the last row. The dot-diameter shielding ratio was at least 85% in a region extending up to 2.6 mm from the edge of the band-shaped film to the dot row position of the second row, at least 80% in a region extending up to 14.5 mm to the dot row position of the third row, at least 65% in a region extending up to 6.1 mm to the dot row position of the fourth row, and at least 50% in a region extending up to 7.35 mm to the dot row position of the fifth row, which was the last row.

### [Example 3]

### (Characteristics of Light-Shielding Film)

Table 1 indicates the characteristics of a dot-patterned film of a light-shielding film formed on a bent glass sheet with a light-shielding film for vehicles according to Example 3. The width of the band-shaped film of the light-shielding film according to Example 3 was approximately 20 mm in the vicinity of the middle of the left-hand side of the glass sheet when viewed from the side of the surface to be positioned inside a vehicle when it is installed in the vehicle. The shape of dots of the dot-patterned film was a circle, while the number n of dot rows was set at ten. The overlap *d0* between the band-shaped film and the dots of the first row was set at 0.7 mm so that the dot-patterned film follows the band-shaped film smoothly. The interval *d1* between the edge of the band-shaped film and the center of the first row was set at 0.15 mm. On the other hand, the intervals *dn* between the dot rows thereafter were set at 1.9, 1.8, 1.8, 1.8, 1.8, 1.8, 1.8, 1.8, 1.8, and 1.8 mm. In this case, the dot row positions were 0.15, 2.05, 3.85, 5.65, 7.45, 9.25, 11.05, 12.85, 14.65, and 16.45 mm, sequentially from the first row. In addition, the width *W* of the dot-patterned film was 17 mm.

The intervals between dots were set at 2.2 mm in all the dot rows. The diameters of dots of the respective dot rows were 1.7, 1.6, 1.6, 1.5, 1.4, 1.3, 1.3, 1.2, 1.1, and 1.1 mm, sequentially from the first row. That is, a dot was present in the standard dot interval L (in this example, the standard dot interval was 2.2 mm) in all the dot rows. Accordingly, in this case, the dot-diameter shielding ratios were 77.3, 72.7, 72.7, 68.2, 63.6, 59.1, 59. 1, 54.5, 50.0, and 50.0%, sequentially from the first row.

### (Relationship of Dot-Diameter Shielding Ratio with respect to Dot Row Position)

Fig. 6 shows a graph indicating the distribution of the dot-diameter shielding ratios with respect to the dot row positions according to Example 3. In this graph, the respective points are connected to each other with straight lines so that the tendency is indicated. From the graph shown in Fig. 6, it can be understood that in the dot-patterned film of Example 3, the dot-diameter shielding ratio decreased linearly from the first row to the last row. The dot-diameter shielding ratio was at least 70% in a region extending up to 3.85 mm from the edge of the band-shaped film to the dot row position of the third row, at least 60% in a region extending up to 7.45 mm to the dot row position of the fifth row, and at least 50% in a region extending up to 16.45 mm to the dot row position of the tenth row, which was the last row.

### [Comparative Example 1]

A light-shielding film of Comparative Example 1 was formed of a band-shaped film alone. The width of the band-shaped film was approximately 20 mm in the vicinity of the middle of the left-hand side of the glass sheet when viewed from the side of the surface to be positioned inside a vehicle when it is installed in the vehicle.

### [Comparative Example 2]

### (Characteristics of Light-Shielding Film)

Table 1 indicates the characteristics of a dot-patterned film of a light-shielding film formed on a bent glass sheet with a light-shielding film for vehicles according to Comparative Example 2. The dot-patterned film was a conventional dot-patterned film. The width of the band-shaped film of the light-shielding film according to Comparative Example 2 was approximately 20 mm in the vicinity of the middle of the left-hand side of the glass sheet when viewed from the side of the surface to be positioned inside a vehicle when it is installed in the vehicle. The shape of dots of the dot-patterned film was a circle, while the number n of dot rows was set at three. The overlap *d0* between the band-shaped film and the dots of the first row was set at 0.6 mm so that the dot-patterned film follows the band-shaped film smoothly. The interval *d1* between the edge of the band-shaped film and the center of the first row was set at 0.1 mm. On the other hand, the intervals *dn* between the dot rows thereafter were set at 1.4 and 1.0 mm. In this case, the dot row positions were 0.1, 1.5, and 2.5 mm, sequentially from the first row. In addition, the width *W* of the dot-patterned film was 3 mm. The intervals between dots were set at 1.6 mm in all the dot rows. The diameters of dots of the respective dot rows were 1.4, 1.2, and 0.8 mm, sequentially from the first row. That is, a dot was present in the standard dot interval *L*, (in this comparative example, the standard dot interval was 1.6 mm) in all the dot rows. Accordingly, in this case, the dot-diameter shielding ratios were 87.5, 75.0, and 50.0%, sequentially from the first row.

### (Relationship of Dot-Diameter Shielding Ratio with respect to Dot Row Position)

Fig. 6 shows a graph indicating the distribution of the dot-diameter shielding ratios with respect to the dot row positions according to Comparative Example 2. In this graph, the respective points are connected to each other with straight lines so that the tendency is indicated. From the graph shown in Fig. 6, it can be understood that in the dot-patterned film of Comparative Example 2, the dot-diameter shielding ratio decreased rapidly from the first row to the last row. The dot-diameter shielding ratio was at least 75% in a region extending up to 1.5 mm from the edge of the band-shaped film to the dot row position of the second row, and at least 50% in a region extending up to 2.5 mm to the dot row position of the third row, which was the last row.

In comparison between the dot-patterned films in Examples 1 to 3, and the dot-patterned film in Comparative Example 2, the range on Comparative Example 2 in which the dot-diameter shielding ratio was at least 50% was smaller than 13.05 mm of Example 1, 7.35 mm of Example 2, and 16.45 mm of Example 3.

### [Evaluation of Transparent Distortion]

The transparent distortions of Examples 1 to 3, and Comparative Examples 1 and 2 were evaluated according to the aforementioned method of evaluating a transparent distortion. The distance *L1* between the grid plate 2 and the center Pof the bent glass sheet with a light-shielding film for vehicles 1 shown in Fig. 5 was set at 2 to 4 m. On the other hand, the distance *L2* between the observer point 3 and the center P of the bent glass sheet with a light-shielding film for vehicles 1 was set at 1 to 3 m. The angle θ of the bent glass sheet with a light-shielding film for vehicles 1 with respect to the horizontal plane was set at 30 to 80°. The angle in the horizontal direction of the bent glass sheet with a light-shielding film for vehicles 1 with respect to the grid plate was set at 0 to 30°. The angle in the horizontal direction is an angle between the grid plate 2 and a tangent to the center Pof the glass sheet 1, the tangent being included in a horizontal plane including the center P.

The observer made the evaluation of transparent distortions by observing the changes in degree to which the vertical or horizontal lines of the grid were curved or in width of the lines while the above-mentioned positional relationships and the aforementioned two angles were changed, and then considering all the observation results.

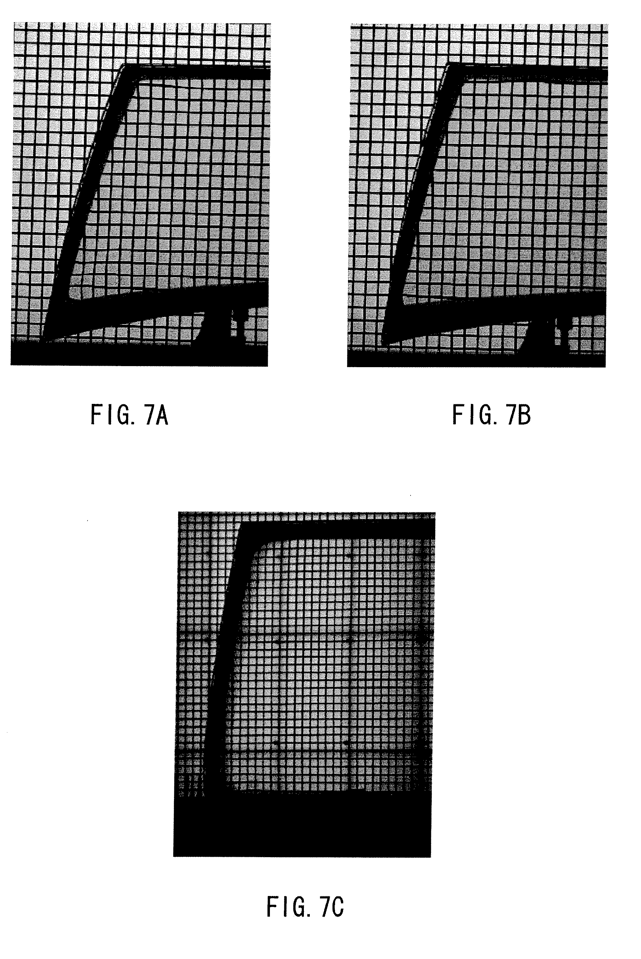

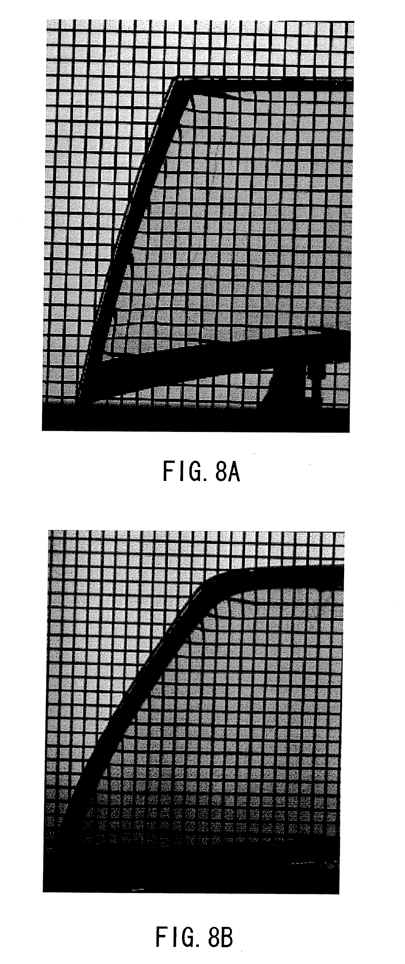

Figs. 7A to 7C, and Figs. 8A and 8B show pictures taken by a camera that was set at the observation point 3, when the distance *L1* between the grid plate 2 and the center Pof the glass sheet with a light-shielding film for vehicles 1 was 3 m, the distance *L2* between the observer 3 and the center P of the glass sheet 1 was 2 m, The angle θ of the glass sheet 1 with respect to the horizontal plane was 30°, and the angle in the horizontal direction of the glass sheet 1 was 0°, that is to say, the tangent to the center P that was included in the horizontal plane including the center *P* was paralleled with the grid plate 2. Figs. 7A to 7B show pictures that exhibit transparent distortions of Examples 1 to 3, respectively. Figs. 8A and 8B show pictures that exhibit transparent distortions of Comparative Examples 1 and 2, respectively. Fig.7A corresponds to Example 1, Fig. 7B to Example 2, Fig. 7C to Example 3, Fig. 8A to Comparative Example 1, and Fig. 8B to Comparative Example 2. These pictures each show the manner in which the transparent distortions occur in the side portion on the left-hand side of the bent glass sheet with a light-shielding film for vehicles.

In Fig. 8A showing Comparative Example 1 that does not include the dot-patterned film, it can be seen that the vertical lines of the grid that are adjacent to the band-shaped film have increased widths in the vicinity of the band-shaped film and are curved considerably to the band-shaped film side in some places. In Fig. 8B showing Comparative Example 2 that includes the dot-patterned film, the phenomenon such as Comparative Example 1 in which lines of the grid have increased widths in the vicinity of the band-shaped film cannot be seen. However, it can be seen that lines of the grid are curved considerably to the band-shaped film.

On the other hand, in Fig. 7A showing Example 1, it can be seen that the vertical lines of the grid that are adjacent to the dot-patterned film not only do not increase in width in the vicinity of the dot-patterned film but also are not curved considerably to the dot-patterned film side. In comparison between Fig. 7A and Fig. 8B, there is no distinct difference of the transparent distortions. The observer, however, was able to determine that the transparent distortion of the bent glass sheet with a light-shielding film in Example 1 was smaller than that in Comparative Example 2 by considering all the results obtained by observing the lines of the grid while the positional relationships among the grid plate, the glass sheet and the point of the observer 3, and the two angles of the bent glass sheet with a light-shielding film were changed. In Fig. 7B showing Example 2, the same as in the case of Fig. 7A showing Example 1 can be seen.

Thus, it can be understood that a bent glass sheet with a light-shielding film for vehicles having a dot-patterned film according to the present invention can be improved in transparent distortion as compared to a conventional bent glass sheet with a light-shielding film for vehicles.

Furthermore, in Fig. 7C showing Example 3, it also can be seen that the vertical lines of the grid that are adjacent to the dot-patterned film not only do not increase in width in the vicinity of the dot-patterned film but also are not curved considerably to the dot-patterned film side.

Thus, it was proved that the light-shielding film having the dot-patterned film in which a region with the dot-width shielding ratio of at least 50% extended up to at least 4 mm, and the gradient of the dot-width shielding ratio was more gradual according to each of Examples 1 to 3 was effective for the improvement in the transparent distortion to be caused in bent glass sheets with a light-shielding film for vehicles.

In the bent glass sheet with a light-shielding film for vehicles of the present invention, each of the width of the band-shaped film and the pattern of the dot-patterned film that are formed in the light-shielding film may be unchanged in all of the film-formed portions, but may be changed depending on the film-formed portions. For example, the width of the band-shaped film and the pattern of the dot-patterned film may be changed between a portion in which the transparent distortion occurs easily and a portion in which the transparent distortion does not occur easily.

In the above-mentioned examples, examples in which a light-shielding film (referred to as "a first light-shielding film" hereinafter) is formed in a part of a peripheral portion of only one surface of the bent glass sheet are described. The present invention, however, is not limited to these examples, and another light-shielding film (referred to as "a second light-shielding film" hereinafter) further may be formed on the other surface of the bent glass sheet.

When the second light-shielding film is formed on the other surface of the bent glass sheet, the second light-shielding film may be composed of only a band-shaped film. In this case, the width of the second light-shielding film is preferably narrower than that of the band-shaped film in the first light-shielding film. In this case, the effect of the transparent distortions occurred by the band-shaped film in the first light-shielding film and the second light-shielding film can be softened by the dot-patterned film in the first light-shielding film. On the other hand, when the width of the second light-shielding film is wider than that of the band-shaped film in the first light-shielding film, the pattern of the dot-patterned film in the first light-shielding film can be decided taking into consideration the effect of the transparent distortion occurred by the second light-shielding film. As another example, the second light-shielding film may be composed of a band-shaped film and a dot-patterned film. In this case, the patterns of the dot-patterned films in the first and second light-shielding film can be decided so that each of the dot-patterned films in the light-shielding films can ease the transparent distortions caused by the band-shaped films in the first and second light-shielding films.

### Industrial Applicability

The bent glass sheet with a light-shielding film for vehicles of the present invention can effectively prevent the transparent distortion from occurring. Therefore, it can be used for all glasses for vehicles. Furthermore, the bent glass sheet of the present invention is preferably applicable to a laminated glass in which a transparent distortion occurs easily because of the structure thereof.

## Claims

1. A bent glass sheet with a light-shielding film for vehicles, comprising a glass sheet, and a light-shielding film formed in at least a part of a peripheral portion of one surface of the glass sheet,
wherein the light-shielding film is composed of a band-shaped film and a dot-patterned film, the band-shaped film is arranged in an outer part of the peripheral portion, and the dot-patterned film composed of a plurality of dots is arranged in an inner part with reference to the band-shaped film;
a ratio of a total dot width to a measurement interval is expressed as a dot-width shielding ratio, where the measurement interval being at least a diameter of the largest dot of the plurality of dots is set in a direction parallel with an edge of the band-shape film located on a side of the dot-patterned film, and the total dot width is a total of all dot widths that are present within the measurement interval in a measurement position, a plurality of the measurement positions being set in a direction perpendicular to the edge of the band-shaped film so that an interval between the measurement positions is half a diameter of the smallest dot of the plurality of dots or less;
the plurality of dots are positioned so that a corrected distribution of the dot-width shielding ratios decreases from the edge of the band-shaped film toward a side of a glass surface on which the light-shielding film is not formed, where the corrected distribution is obtained by connecting to each other peaks of mountains that are formed of a distribution of the dot-width shielding ratios in the plurality of the measurement positions with a straight line; and
a region in which the dot-width shielding ratio is at least 50% in the corrected distribution extends up to at least 4 mm from the edge of the band-shaped film.

2. The bent glass sheet with a light-shielding film for vehicles according to claim 1, wherein the plurality of dots are positioned so that the corrected distribution substantially is unchanged between the edge of the band-shaped film and a predetermined position, and decreases from the predetermined position toward the side of a glass surface on which the light-shielding film is not formed.

3. The bent glass sheet with a light-shielding film for vehicles according to claim 1, wherein the plurality of dots are positioned so that the corrected distribution decreases monotonically from the edge of the band-shaped film toward the side of a glass surface on which the light-shielding film is not formed.

4. A bent glass sheet with a light-shielding film for vehicles, comprising a glass sheet, and a light-shielding film formed in at least a part of a peripheral portion of one surface of the glass sheet,
wherein the light-shielding film is composed of a band-shaped film and a dot-patterned film, the band-shaped film is arranged in an outer part of the peripheral portion, and the dot-patterned film composed of a plurality of dots is arranged in an inner part with reference to the band-shaped film;
the dot-patterned film includes a plurality of dot rows, and the respective dot rows include a plurality of dots arranged cyclically;
the plurality of dots are positioned so that a center line of each of the dot rows is in parallel to a edge of the band-shaped film located on a side of the dot-patterned film, the center line being a line that extends through respective center points of the plurality of dots included in each of the dot rows;
a ratio of a total dot diameter to a standard dot interval is expressed as a dot-diameter shielding ratio, where the standard dot interval is a one-cycle interval of a dot row having the longest cycle, and the total dot diameter is a total of all dot diameters that are present within the standard dot interval of each of the dot rows;
the plurality of dots are positioned so that the dot-diameter shielding ratio decreases from a side of a first row toward a side of a last row, where the first row is a row nearest to the band-shaped film, while the last row is a row furthest therefrom; and
a region in which the dot-diameter shielding ratio is at least 50% extends at least up to 4 mm from the edge of the band-shaped film in a dot row position, the dot row position being a position of the center line of each of the dot rows with reference to the edge of the band-shaped film.

5. The bent glass sheet with a light-shielding film for vehicles according to claim 4, wherein the dot-patterned film includes at least three dot rows, and
the plurality of dots are positioned so that the dot-diameter shielding ratio substantially is unchanged between the first row and a predetermined dot row, and decreases from the predetermined dot row toward the last row.

6. The bent glass sheet with a light-shielding film for vehicles according to claim 4, wherein the dot-patterned film includes at least three dot rows, and
the plurality of dots are positioned so that the dot-diameter shielding ratio decreases monotonically from the first row toward the last row.
